# EUROPEAN PATENT SPECIFICATION

(11) **EP 0 628 369 B1**
(45) Date of publication and mention of the grant of the patent: **14.03.2001**
(21) Application number: 94500082.6
(22) Date of filing: 11.05.1994
(51) Int. Cl.: B23B 27/14

(54) **Methods for obtaining cutting tools, and cutting tools obtained by these methods**
Verfahren zur Herstellung von Schneidwerkzeugen und dadurch hergestellte Schneidwerkzeuge
Méthodes pour la fabrication des outils de coupe et outils de coupe obtenus par ces méthodes

(30) Priority: 13.05.1993 ES 9301024
(43) Date of publication of application: 14.12.1994
(73) Proprietor: HERRAMIENTAS PREZISS, S.L., E-08390 Montgat (Barcelona) (ES)
(72) Inventor: Farrarons Losse, Pedro, ES-08391 Tiana (Barcelona) (ES)
(74) Representative: Ponti Sales, Adelaida

(56) References cited:
- EP-A- 0 506 238
- PATENT ABSTRACTS OF JAPAN vol. 3, no. 24 (M-50) 27 February 1979 & JP-A-54 000 292 (SUMITOMO DENKI KOGYO K.K.) 5 January 1979

## Description

The present invention relates to methods for obtaining cutting tools, in particular cutting tools with cutting inserts of polycrystalline diamond. A method comprising the steps of the preamble of claim 1 is known from EP-A-506 238.

It also refers to the tools obtained by said methods.

### BACKGROUND OF THE INVENTION

The cutting tools currently used for working materials such as wood and the like consist essentially of a body with peripheral housings in which are housed cutting inserts of hard metal or the like. These cutting inserts are the part of the tool that carries out the machining of the material such as wood or the like. The hardness of said hard metals, such as tungsten carbide, is greater than the steels traditionally used and as a result they are subject to less wear.

Diamond is harder than said metals and has therefore also been used for cutting inserts. More particularly, the cutting inserts are made of a hard metal such as tungsten carbide and polycrystalline diamond. The polycrystalline diamond constitutes the attacking surface and is arranged on the hard metal which acts as a support. Therefore, only part of the cutting insert is made of diamond, as this is the most expensive material.

Methods for obtaining cutting tools are known and consist of cutting the cutting inserts of the tools from a plate consisting of a layer of polycrystalline diamond arranged on a hard metal support, in a first phase cutting a plurality of portions, each of which corresponds to a plurality of cutting inserts, and in a second phase cutting said portions into the individual cutting inserts; machining the body of the tools to form the housings for the cutting inserts; inserting said cutting inserts into housings in the body of the tools; welding them thereto; and, if necessary, machining the cutting inserts to obtain the required dimensions.

In the known embodiments, the layer of polycrystalline diamond occupies the entire front surface of the cutting insert, and therefore the amount of diamond used in each cutting insert represents a considerable proportion of the cutting insert as a whole. As a result, the cost of the cutting insert is relatively high.

This embodiment has the further drawback that, as the cutting insert wears with use, only the outermost part which is in contact with the material being machined is eliminated, a considerable amount of the polycrystalline diamond remaining unused.

Furthermore, the height of the cutting insert is limited in order to economize on the polycrystalline diamond and, as a result, the fixing surface of the cutting insert is also limited.

Other types of tools are also currently known. During the decade of the 1970's cutting tools with interchangeable cutting inserts or blades appeared on the market as an alternative to tools with welded cutting inserts of hard metal.

Said tools use a standard range of hard metal blades with the characteristic that they can be easily replaced as well as reversed, and in some cases are provided with double or even quadruple cutting edges.

Nevertheless, it is not possible to use polycrystalline diamond blades obtained by means of the conventional cutting system used for the plates of polycrystalline diamond on a hard metal support, since the cost of said blades would be very high due to the fact that the layer of polycrystalline diamond occupies the entire front face of the blade or cutting insert.

Twist drills with cutting inserts formed from polycrystalline diamond (PCD) composite compacts are known in various forms. One known twist drill of this type incorporates a cutting insert which is generally wedge-or chevron-shaped, which comprises a central layer of PCD with a thin tungsten carbide layer on each side thereof. The document EP-A-506 238 refers to a method of producing a composite cutting insert and a twist drill incorporating the insert avoiding the sandwich material and its drawbacks. This method includes essentially the steps of:
- forming first and second cutting insert halves (see figures 3, 4 and 5) and
- arranging this halves back-to-back to form a composite cutting insert (see figure 4 and 5).

This method intends to solve the drawbacks of the sandwich material inserts, in particular the cost due to the two tungsten layers and the use of carbide as a matching material and the proneness to breakage due to the internal stresses particularly with long drills. entire front face of the blade or cutting insert.

### DESCRIPTION OF THE INVENTION

The method of the invention solves these drawbacks and provides further advantages which are described below.

The method for obtaining cutting tools, according to the invention, consists of:
a) cutting the cutting inserts of the tools from a plate consisting of a layer of polycrystalline diamond arranged on a hard metal support, cutting in a first phase a plurality of portions each of which corresponds to one or more cutting inserts and cutting in a second phase said portions into the individual cutting inserts,
b) inserting said cutting inserts into housings in the body of the tools,
and is characterized in that the cutting inserts are arranged on the body of the tools such that the layer of polycrystalline diamond only occupies the part which is furthest away from the axis of rotation of the tool.

Preferably, the cutting inserts are cut such that the distance between two adjacent cuts is between 1 mm and 5 mm.

The plate is cut in a way which is different from the known conventional way of cutting and which depends on the way in which the cutting insert will be arranged on the tools.

With the layer of polycrystalline diamond arranged in this way, the proportion of polycrystalline diamond relative to the cutting insert as a whole is reduced and therefore the cost of the cutting insert is less than that of the cutting inserts obtained using conventional cutting. The cost of a circular saw comprising the cutting inserts of the invention is reduced to one third of the cost of a saw made using conventional cutting inserts.

Furthermore, as the cutting insert wears away with use the entire layer of polycrystalline diamond is used, taking advantage of every part of said material.

The thickness of the layer of polycrystalline diamond is between 0.5 and 1.5 mm, preferably 1 mm, and the thickness of the hard metal support is between 5 and 15 mm, preferably 8 mm.

These dimensions are possible due to the economical use of the layer of polycrystalline diamond.

Another advantage which results from these dimensions is that the contact surface of the tungsten carbide support on the body of the tool is greater than in the conventional case, and as a result the weld is firmer and the cutting insert is less likely to become detached. It also makes it less likely for the cutting inserts to detach themselves from the body as a result of accidental blows.

The plate is cut during the first phase along an inclined plane which forms an acute angle with the plane at right angles to the surface of the plate, enabling the attack angle A of the tool to be defined for different positions of the cutting insert.

In case of welded cutting inserts, the method consists of:
c) machining the body of the tools to form the housings for the cutting inserts, and
d) welding this cutting inserts thereto.

The method of the invention is further characterized in that the housings are machined into the body of the tool such that the lower part of the housing and a plane which is at right angles to the rear part of the housing and parallel to the axis of the tool form an angle which is equal to the acute cutting angle.

Thus the cutting insert can be inserted into the housing in such a way that its inner edge is surrounded by the body of the tool, making it difficult for the cutting insert to detach itself.

A further characteristic of a preferred embodiment of the invention is that the acute cutting angle is between 9° and 30° according to the different attack angles of the tool, comprised between +12° and -5°.

Preferably, the acute cutting angle is 24°.

The method of the invention has several characteristics which result from the configuration of the tool and in particular of the cutting inserts, due to the fact that the layer of polycrystalline diamond is relatively thin and is arranged on the peripheral end of the tool.

As a result, the tool has to be machined and handled with great accuracy.

More particularly, the lower part of the housing is machined to an accuracy of 0.02 mm and the cutting inserts are inserted into their respective housings and welded with controlled pressure in order to achieve a radial projection of 0.1 mm.

Furthermore, the peripheral machining of the cutting inserts, in order to give the layer of polycrystalline diamond the required dimensions, is carried out by electro-erosion using less power and for a longer time than the power and time used for machining the hard metal.

The invention also relates to cutting tools with welded cutting inserts obtained by the method described in the previous claims.

In particular, it relates to disc tools such as circular saws or milling cutters. In these types of tools the cutting inserts may have different shapes and angles according to the field of application. For example: peg tooth for cutting hard wood along the grain; alternate tooth, for cutting hard wood across the grain, chipboard, methacrylate, plastic reinforced with glass fibre, carbon fibre and "composites"; combined trapezial/flat tooth, for cutting chipboard covered with melamine, PVC Formica, etc.; combined trapezial/flat tooth with a negative angle, which is a variation of the previous one, for cutting nonferrous metals such as aluminium, bronze, brass, etc. and sheets of very abrasive materials; concave tooth, for cutting boards covered with melamine, Formica, Resopal, wood veneer, varnish, etc.; combined concavo-trapezial tooth, which is a variation of the previous one, for applications with lower cutting effort, resulting in perfect self-guiding of the saw.

In particular it is worth pointing out the method for producing concave teeth by machining the front faces of the cutting inserts, since this type of tooth is not possible to produce using conventional cutting inserts of polycrystalline diamond because the concavity would have to be achieved at the expense of the diamond layer.

The cutting inserts mode according to the method of the invention can also be applied to the tools having a shaft which are normally used in milling/copying machines. Due to their high speed of rotation and relatively small diameter, these tools need cutting edges which are highly resistant to wear, and so cutting inserts of polycrystalline diamond are very convenient. In this case, and as has been mentioned above, the cost of the cutting inserts is reduced and the layer of polycrystalline diamond is used to the full.

The invention further relates to a method for obtaining cutting tools with interchangeable cutting inserts or blades which consists of:
c) drilling one or more bores (20,21) in the cutting inserts or blades (19) for fixing them to the support or head (22).
d) arranging the cutting inserts or blades (19) on the support or head (22) of the tools, being removably mounted.

The thickness of the layer of polycrystalline diamond is between 0.5 and 1.5 mm and the thickness of the hard metal support is between 10 and 15 mm.

Preferably, the total height of the plate, consisting of the layer of polycrystalline diamond and the hard metal support, is 10.7 mm.

Also preferably, the plate is cut during the first phase along an inclined plane which forms an acute angle of 30° with the plane at right angles to the surface of the plate.

The preferred thickness and cutting angle allow to achieve the standard dimensions of the blade, as will be seen later with the help of the drawings.

The invention also relates to a cutting tool with interchangeable cutting inserts or blades obtained by means of the method described.

As has been described above, this application was not possible for the cutting inserts of polycrystalline diamond and hard metal obtained by means of conventional cutting and arrangement due to the high costs implied.

Another advantage of the cutting inserts obtained by means of the method of the invention is the use of the opposite edge which is made of high quality hard metal and whose performance is superior to that of conventional hard metal blades.

With the blades of the invention it is possible to carry out successive re-sharpenings (approximately four) depending on the degree of wear. In the tests that were carried out, efficiencies of between 80 and 200 times that of conventional hard metal blades were achieved.

### BRIEF DESCRIPTION OF THE DRAWINGS

In order that the characteristics of the present invention be better understood, the accompanying drawings show by way of a non-limiting example one practical embodiment thereof.

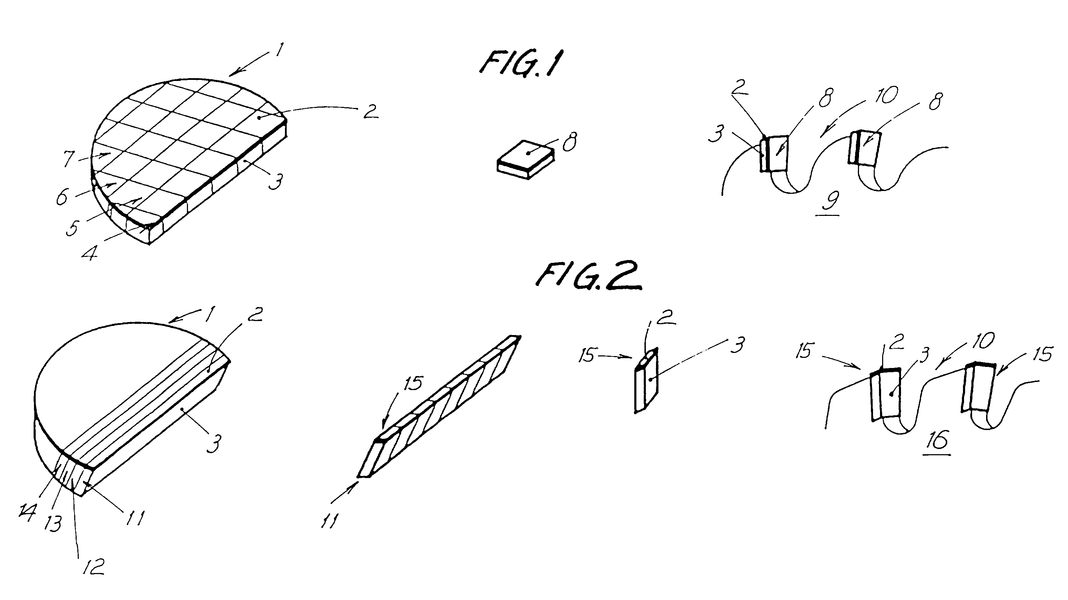

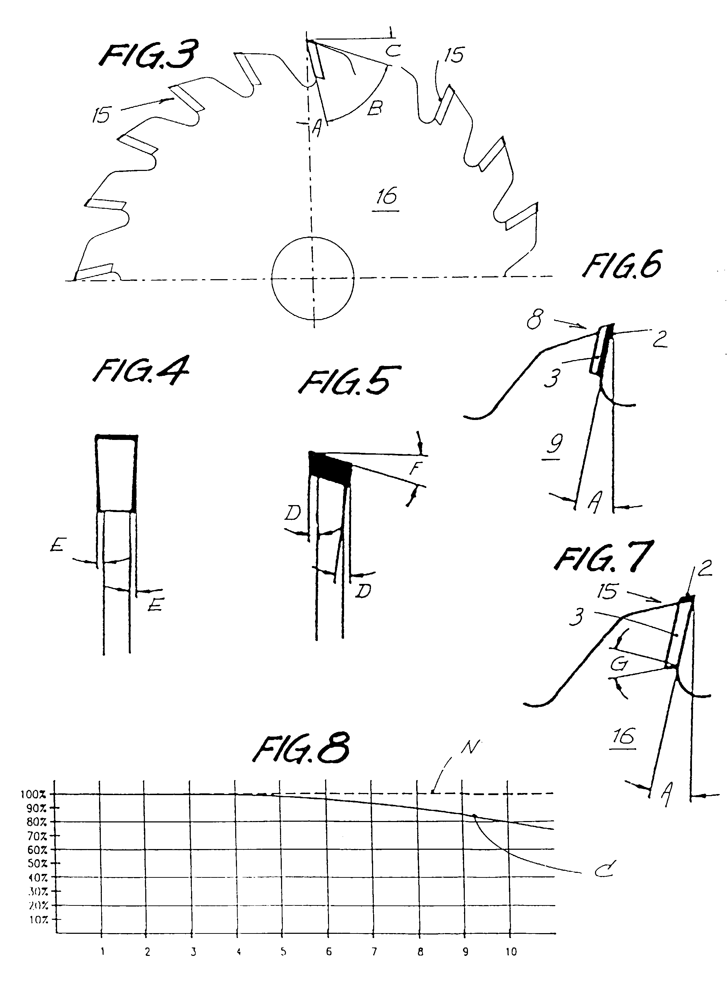

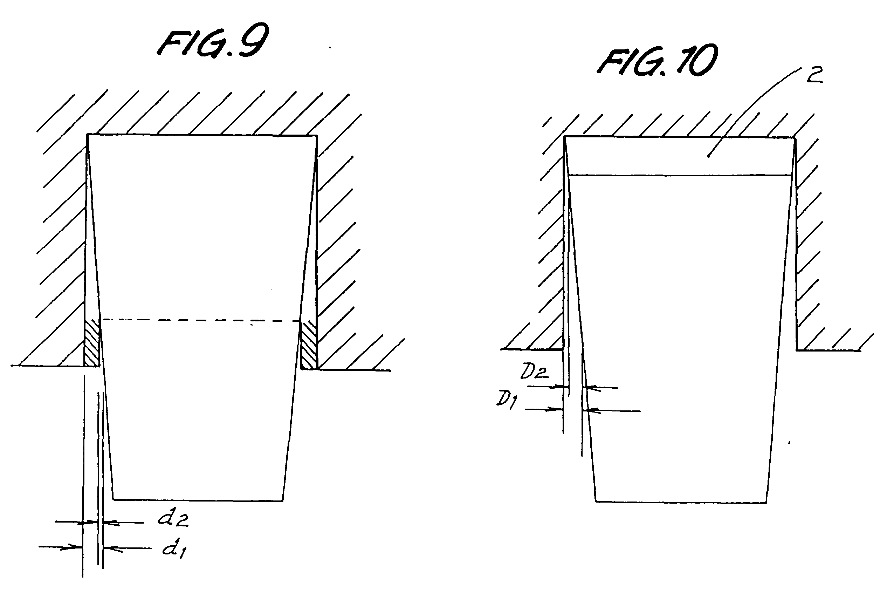

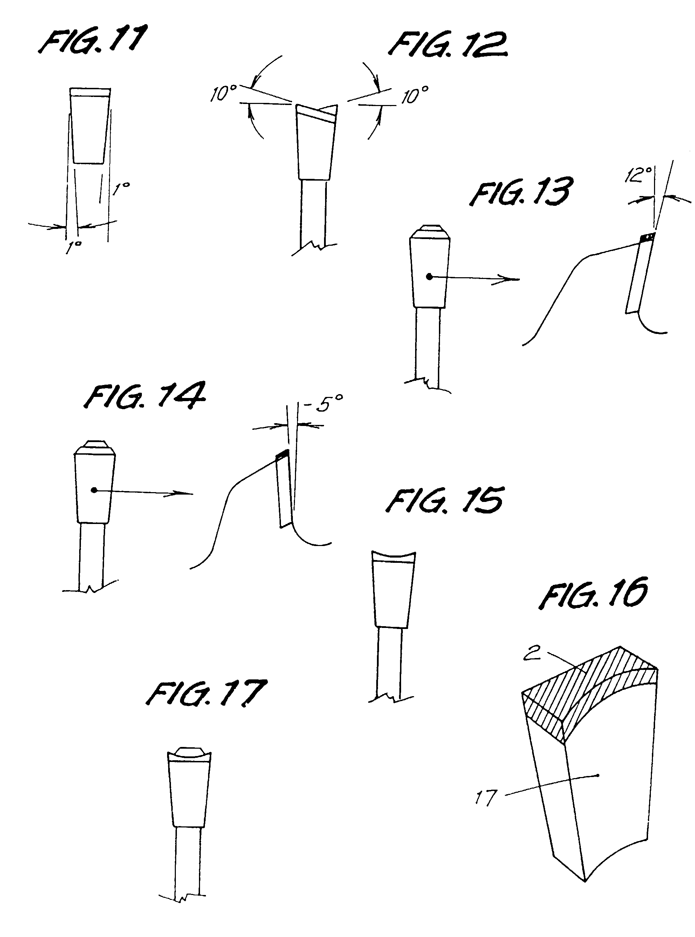

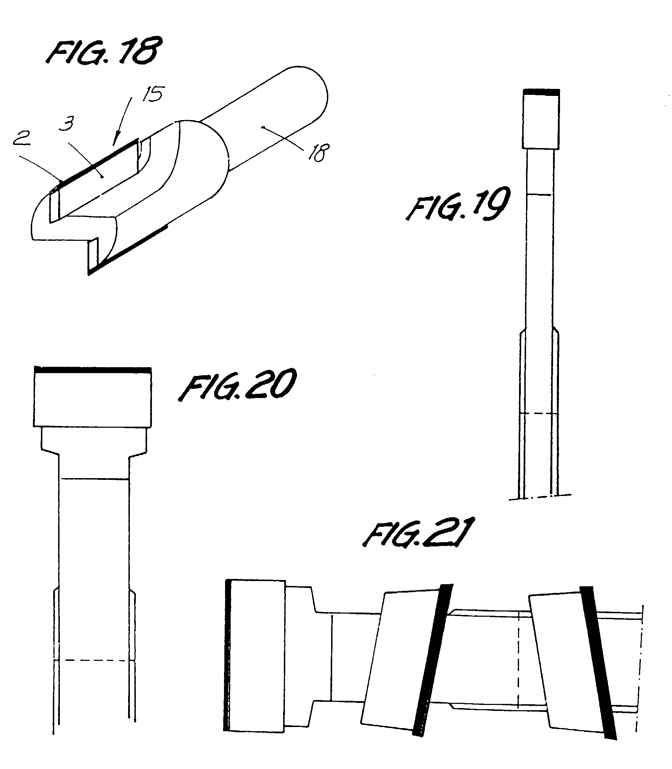

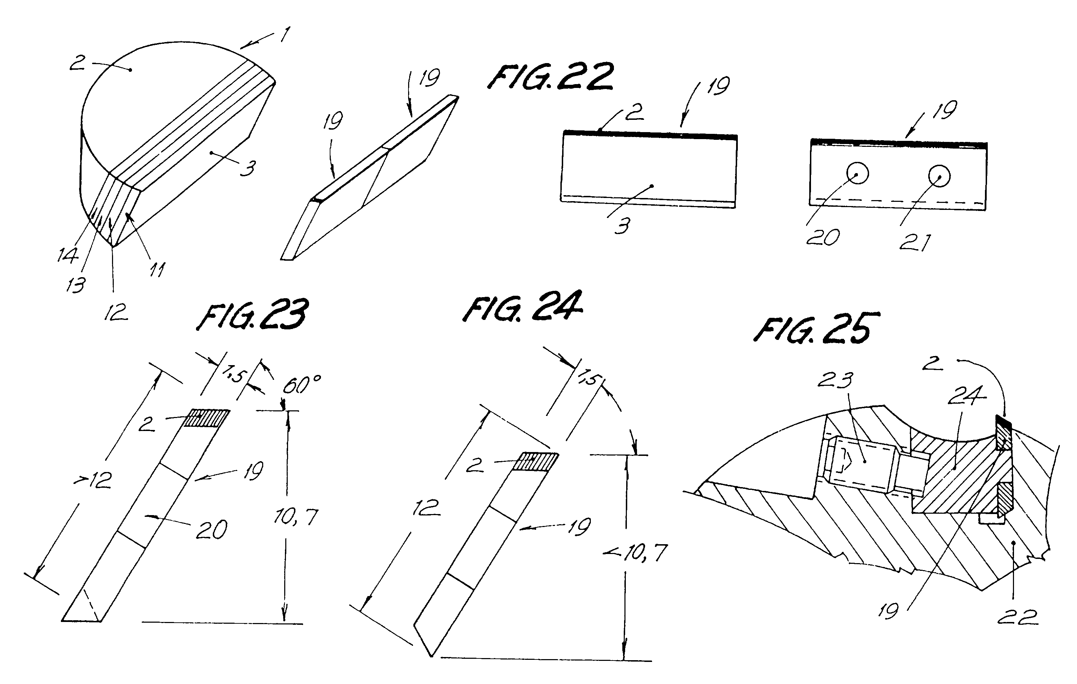

In said drawings, figure 1 is a perspective view showing the method for obtaining cutting tools by means of conventional cutting and the conventional arrangement of the cutting inserts on the tool; figure 2 is a perspective view showing the method for obtaining cutting tools by means of the cutting and the arrangement of the cutting inserts according to the method of the invention; figure 3 is an elevation view which shows half of a circular saw according to the invention; figure 4 is front view of a cutting insert of the circular saw shown in figure 3; figure 5 is a plan view of a cutting insert of the circular saw shown in figure 3; figure 6 is a detail in side elevation of a tool obtained by the conventional method; figure 7 is a detail in side elevation of a tool obtained by the method of the invention; figure 8 is a graph which compares the efficiency of two circular saws with cutting inserts of polycrystalline diamond, one obtained by the conventional method and the other obtained by the method of the invention; figures 9 and 10 show a cutting mode with a conventional cutting insert of diamond and a cutting mode with the cutting insert of the invention respectively; figures 11 to 17 show several embodiments of the cutting inserts of the invention; figure 18 is a perspective view of a milling cutter with a shaft obtained by the method of the invention; figure 19 is a front view of a milling cutter for grooving; figure 20 is a front view of a milling cutter for slots; figure 21 is a front view of a cutter for edging; figure 22 is a perspective view showing the method for obtaining interchangeable cutting inserts or blades; figure 23 shows, in section, a blade after having been cut from the plate; figure 24 shows, also in section, the same blade as figure 23 in its finished state; and figure 25 is a section view of the assembly of a blade on its support or head.

### DESCRIPTION OF PREFERRED EMBODIMENTS

Figure 1 shows a plate 1 consisting of a layer of polycrystalline diamond 2 arranged on a hard metal support 3.

As can be seen, in a first phase a plurality of portions 4, 5, 6 and 7 are cut, each corresponding to a plurality of cutting inserts, and in a second phase said portions are cut into the individual cutting inserts 8.

Finally, said cutting inserts 8 are inserted into housings in the body 9 of the tools 10.

The polycrystalline diamond on -said tools 10 constitutes the attack surface of the material and the hard metal 3 forms the support, i.e. only part of the cutting insert is made of diamond.

In the conventional process the layer of polycrystalline diamond 2 occupies the entire front surface of the cutting insert 8, and therefore the amount of diamond used in each cutting insert represents a considerable proportion of the cutting insert as a whole.

Figure 2 shows the method of the invention. In this method the plates are cut in narrower portions 11,12, 13,14, such that the layer of polycrystalline diamond 2 is a minimum. Preferably, the distance between two adjacent cuts is between 1.3 mm and 2.5 mm.

The cutting inserts 15 are arranged on the body 16 of the tools in such a way that the layer of polycrystalline diamond 2 only occupies the part which is furthest away from the centre of said body 16.

Figure 3 shows half of a circular saw according to the invention provided with a plurality of cutting inserts 15. The angles A, B and C are marked on the figure. The angles D, E and F are marked on figures 4 and 5. The table below gives the values of the different angles:

| ANGLE VALUES IN SAWS OF POLYCRYSTALLINE DIAMOND | | |
|---|---|---|
| | MAX | MIN |
| A- ATTACK ANGLE | +12° | -5° |
| B- CUTTING ANGLE | 66° | 61° |
| C- DIAMETRIC RELIEF ANGLE | 12° | 29° |
| D- LATERAL RELIEF ANGLE | 5° | 3° |
| E- RADIAL RELIEF ANGLE | 1° | 0.5° |
| F- AXIAL CUTTING ANGLE | 10° | 0° |

In figures 6 and 7 it can be seen that the contact surface of the tungsten carbide support 3 on the body of the tool 9,16 is greater than in the conventional case. As a result, the weld is firmer and the cutting insert is less likely to become detached.

As can be seen in figures 2, 3 and 7 the plate 1 is cut during the first phase along an inclined plane which forms an acute angle with the plane at right angles to the surface of the plate, enabling the attack angle A of the tool to be defined for different positions of the cutting insert.

It can also be seen in figures 3 and 7 7 that the housings are machined into the body 16 of the tool 10 such that the lower part of the housing and a plane which is at right angles to the rear part of the housing and parallel to the axis of the tool form an angle G which is equal to the acute cutting angle. The inner edge of the cutting insert is thereby surrounded by the body of the tool, making it difficult for the cutting insert todetach itself.

Figure 8 is a graph showing the efficiency of two circular saws with cutting inserts of polycrystalline diamond, one obtained by the conventional method and the other obtained by the method of the invention.

The X-axis represents the number of sharpening operations and the Y-axis represents the efficiency. The curve drawn with a solid line C represents the efficiency of a tool produced by the conventional method and the curve drawn with a broken line N represents the efficiency of a tool produced by the method of the invention.

The comparison is made between a conventional cutting insert and three cutting inserts according to the invention, since this would be the equivalent cost of the cutting inserts. In other words, a better efficiency is achieved at the same cost. Curve N means that the cutting insert of the invention always works at maximum efficiency, since the cutting insert is substituted with another before its cutting efficiency drops.

The cutting insert obtained by the method of the invention keeps a constant efficiency while the layer of polycrystalline diamond remains. The efficiency of the conventional cutting insert, however, decreases progressively with successive sharpenings.

Figures 9 and 10 show how this behaviour can be explained. In figure 9 it can be seen how successive sharpenings reduce the free space around the cutting insert. The distance is reduced from d1 to d2. The expulsion of swarf is reduced and the dissipation of the heat produced during cutting becomes worse, thereby reducing efficiency (more frequent sharpenings).

On the contrary, with the cutting insert of the invention (figure 10) sharpening is limited only to the layer of diamond 2 and the free space around the cutting insert hardly varies at all, since the difference between distance D1 and D2 is of little significance. This means that good swarf expulsion and good heat dissipation are always maintained during cutting.

The cutting inserts 15 may have different shapes and angles according to the field of application. Figures 11 to 17 show several embodiments of the cutting inserts of the invention.

Figure 11 shows a peg tooth for cutting hard woods along the grain. Also marked are radial relief angles of 1°.

Figure 12 shows an alternate tooth, an angle of inclination of 10° being indicated. In this case the tool alternates tooths with the edges protruding towards each side. It is used for cutting hard wood across the grain, chipboard, methacrylate, plastic reinforced with glass fibre, carbon fibre and "composites".

Figure 13 shows a combined trapezial/flat tooth, i.e. the tool alternates a trapezial tooth and a flat tooth. It is used for cutting chipboard covered with melamine, PVC Formica etc. In this case the attack angle is positive, e.g. 12°.

Figure 14 shows a combined trapezial/flat tooth with negative angle (for example -5°), which is a variation of the previous tooth, for cutting nonferrous metals such as aluminium, bronze, brass, etc. and sheets of very abrasive materials.

Figure 15 shows a concave tooth, for cutting boards covered with melamine, Formica, Resopal, wood veneer, varnish, etc. Figure 16 shows a perspective view of the same tooth. As can be seen, with the cutting insert of the invention it is possible to produce the concavity on the front face 17, since the layer of polycrystalline diamond 2 is arranged only on the upper end.

Figure 17 shows a combined concavo-trapezial tooth, which is a variation of the previous tooth, for applications with less cutting effort, providing perfect self-guiding of the saw.

As is shown in figure 18, the cutting inserts 15 of the invention can also be applied to tools with a shaft 18 which are used in milling/copying machines.

Figures 19, 20 and 21 show different tools which are suitable for different applications: figure 19 shows a milling cutter for grooving, figure 20 represents a milling cutter for slots and figure 21 is a milling cutter for edging.

Figures 22 to 25 relate to the method for obtaining cutting inserts or blades and to tools of this type.

In figure 22 it can be seen how the cutting inserts or blades 19 are cut from a plate consisting of a layer 2 of polycrystalline diamond arranged on a hard metal support 3.

A plurality of portions 11,12,13,14 are cut in a first phase, each of them corresponding to a pair of cutting inserts 19. They are cut such that the distance between two adjacent cuts is 1.5 mm. They are cut at 30° as shown in figures 23 and 24 in which the complementary angle of 60° is indicated.

As can also be seen in figure 22, said portions are then cut into the individual cutting inserts 19 and a pair of bores 20,21 are drilled therein for fixing them to the support or head 22.

Figure 23 shows a blade after having been cut from the plate. The length of the cutting insert is several tenths greater than the nominal value of 12 mm.

Figure 24 shows the blade of figure 23 in its finished state, after sharpening the diamond edge and the hard metal edge, thus achieving the nominal size of 12 mm.

Figure 25 shows a blade assembled on its support or head 22. As can be seen, the layer of polycrystalline diamond 2 only occupies the part which is furthest away from the centre of said body.

As has been indicated above, when the layer 2 of polycrystalline diamond 2 has worn away, with these cutting inserts it is also possible to use the opposite edge 21, which is made of high quality hard metal, by simply reversing the blade which is fixed in the conventional way by means of a screw 23 and through a removably mounted wedge 24.

## Claims

1. A method for obtaining cutting tools which consists of:
a) cutting the cutting inserts of the tools (10) from a plate (1) consisting of a layer of polycrystalline diamond (2) arranged on a hard metal support (3), cutting in a first phase a plurality of portions (4,5,6,7;11,12,13,14) each of which corresponds to one or more cutting inserts (8;15) and cutting in a second phase said portions into the individual cutting inserts (8;15),
b) inserting said cutting inserts into housings in the body (9;16) of the tools (10),
characterized in that the cutting inserts (15) are arranged on the body (16) of the tools (10) such that the layer of polycrystalline diamond only occupies the part which is furthest away from the axis (16a) of rotation of the tool (10).

2. A method according to claim 1, characterized in that the cutting inserts (15) are cut such that the distance between two adjacent cuts is between 1 mm and 5 mm.

3. A method according to claim 1 or 2, characterized in that consists of:
c) machining the body of the tools (10) to form the housings for the cutting inserts (15), and
d) welding this cutting inserts (15) thereto.

4. A method according to claim 1 to 3, characterized in that the thickness of the layer (2) of polycrystalline diamond is between 0.5 and 1.5 mm, preferably 1 mm, and the thickness of the hard metal support (3) is between 5 and 15 mm, preferably 8 mm.

5. A method according to claim 1 to 4, characterized in that the plate (1) is cut during the first phase along an inclined plane which forms an acute angle with the plane at right angles to the surface of the plate, enabling the attack angle A of the tool (10) to be defined for different positions of the cutting insert.

6. A method according to claim 5 in which the housings for the cutting inserts consist of a rear part and a lower part, characterized in that the housings are machined into the body (16) of the tool such that the lower part of the housing, and a plane at right angles to the rear part of the housing and parallel to the axis of the tool, form an angle G which is equal to the acute cutting angle.

7. A method according to claim 6, characterized in that the acute cutting angle is between 9° and 30° according to the different attack angles A of the tool.

8. A method according to claim 7, characterized in that the acute cutting angle is 24°.

9. A method according to claim 6, characterized in that the lower part of the housing is machined to an accuracy of 0.02 mm.

10. A method according to claim 6, characterized in that the cutting inserts (15) are inserted into their respective housings and welded with controlled pressure in order to achieve a radial projection of 0.1 mm.

11. A method according to claim 10, characterized in that the peripheral machining of the cutting inserts (15), in order to give the layer (2) of polycrystalline diamond the required dimensions, is carried out by electro-erosion using less power and for a longer time than the power and time used for machining the hard metal.

12. A method according to any of the previous claims, characterized in that the front faces (17) of the cutting inserts (15) are machined to form concave teeth.

13. A method according claim 1 or 2, cha<racterized in that it consists of:
c) drilling one or more bores (20,21) in the cutting inserts or blades (19) for fixing them to the support or head (22).
d) arranging the cutting inserts or blades (19) on the support or head (22) of the tools, being removably mounted.

14. A method according to claim 13, characterized in that the thickness of the layer (2) of polycrystalline diamond is between 0.5 and 1.5 mm and the thickness of the hard metal support (3) is between 10 and 15 mm.

15. A method according to claim 14, characterized in that the total height of the plate (1) comprising the layer (2) of polycrystalline diamond and the hard metal support (3), is 10.7 mm.

16. A method according to claim 15, characterized in that the plate (1) is cut during the first phase along an inclined plane which forms an acute angle of 30° with the plane at right angles to the surface of the plate (1).

17. A cutting tool with interchangeable cutting inserts or blades, said cutting inserts or blades being removably mounted on the tools on a support or head (22), obtained by the method of claims 13 to 16.

## Patentansprüche

1. Verfahren zur Schaffung von Schneidwerkzeugen, bestehend aus:
(a) Trennen von Schneideinsätzen der Werkzeuge (10) von einer Platte (1), die aus einer Schicht aus einem polykristallinen Diamanten (2) besteht, die auf einem Hartmetallträger (3) angeordnet ist, wobei in einer ersten Phase eine Vielzahl von Abschnitten (4, 5, 6, 7; 11, 12, 13, 14) getrennt werden, von denen jeder einem oder mehreren Schneideinsätzen (8; 15) entspricht, und wobei in einer zweiten Phase die Abschnitte in individuelle Schneideinsätze (8; 15) geschnitten werden;
(b) Einsetzen der Schneideinsätze in Aufnahmen in dem Körper (9; 16) der Werkzeuge (10);
dadurch gekennzeichnet, daß die Schneideinsätze (15) auf dem Körper (16) der Werkzeuge (10) derart angeordnet werden, daß die Schicht aus polykristallinem Diamant nur den Abschnitt besetzt, welcher von der Rotationsachse (16a) des Werkzeugs (10) am weitesten entfernt liegt.

2. Verfahren nach Anspruch 1, dadurch gekennzeichnet, daß die Schneideinsätze (15) derart geschnitten werden, daß der Abstand zwischen zwei benachbarten Schnitten zwischen 1 mm und 5 mm liegt.

3. Verfahren nach Anspruch 1 oder 2, gekennzeichnet durch folgende Verfahrensschritte:
(c) Bearbeiten des Körpers des Werkzeugs (10) zur Bildung der Aufnahmen für die Schneideinsätze (15); und
(d) Schweißen dieser Schneideinsätze (15) an diese.

4. Verfahren nach Anspruch 1 bis 3, dadurch gekennzeichnet, daß die Dicke der Schicht (2) aus polykristallinem Diamant zwischen 0,5 und 1,5 mm, vorzugsweise 1 mm beträgt, und daß die Dicke des harten Metallträgers (3) zwischen 5 und 15 mm, vorzugsweise bei 8 mm, liegt.

5. Verfahren nach Anspruch 1 bis 4, dadurch gekennzeichnet, daß die Platte (1) während der ersten Phase längs einer geneigten Ebene, die einen spitzen Winkel bildet, unter rechten Winkeln der Ebene zu der Oberfläche der Platte geschnitten wird, wodurch der Angriffswinkel A des Werkzeugs (10) für verschiedene Stellungen des Schneideinsatzes gebildet werden kann.

6. Verfahren nach Anspruch 5, bei denen die Aufnahmen für die Schneideinsätze aus einem hinteren Abschnitt und einem unteren Abschnitt bestehen, dadurch gekennzeichnet, daß die Aufnahmen in den Körper (16) des Werkzeugs derart eingearbeitet werden, daß der untere Abschnitt der Aufnahme und eine Ebene unter rechten Winkeln zu dem rückseitigen Abschnitt der Aufnahme und parallel zur Achse des Werkzeugs einen Winkel G bilden, der gleich dem spitzen Schneidwinkel ist.

7. Verfahren nach Anspruch 6, dadurch gekennzeichnet, daß der spitze Schneidwinkel zwischen 9° und 30° gemäß den unterschiedlichen Angriffswinkeln A des Werkzeugs beträgt.

8. Verfahren nach Anspruch 7, dadurch gekennzeichnet, daß der spitze Schneidwinkel 24° beträgt.

9. Verfahren nach Anspruch 6, dadurch gekennzeichnet, daß der untere Abschnitt der Aufnahme mit einer Genauigkeit von 0,02 mm hergestellt ist.

10. Verfahren nach Anspruch 6, dadurch gekennzeichnet, daß die Schneideinsätze (15) in ihre jeweiligen Aufnahmen eingesetzt und mit gesteuertem Druck geschweißt werden, um einen radialen Vorstand von 0,1 mm zu erreichen.

11. Verfahren nach Anspruch 10, dadurch gekennzeichnet, daß die Umfangsbearbeitung der Schneideinsätze (15), um der Schicht (2) aus polykristallinem Diamant die gewünschten Abmessungen zu geben, durch Elektroerosion unter Verwendung eines geringeren Stroms und über eine längere Zeit als der Strom und die Zeit durchgeführt wird, die zum Bearbeiten des Hartmetalls verwendet werden.

12. Verfahren nach einem der vorangehenden Ansprüche, dadurch gekennzeichnet, daß die vorderen Flächen (17) der Schneideinsätze (15) zur Bildung von konkaven Zähnen bearbeitet werden.

13. Verfahren nach Anspruch 1 oder 2, dadurch gekennzeichnet, daß es folgende Verfahrensschritte aufweist:
c) Bohren eines oder mehrerer Löcher (20, 21) in die Schneideinsätze oder Klingen (19) zur Befestigung derselben an dem Träger oder Kopf (22);
d) Anordnen der Schneideinsätze oder Klingen (19) auf dem Träger oder Kopf (22) der Werkzeuge in entfernbarer Montage.

14. Verfahren nach Anspruch 13, dadurch gekennzeichnet, daß die Dicke der Schicht (2) des polykristallinen Diamanten zwischen 0,5 und 1,5 mm beträgt, und daß die Dicke des Hartmetallträgers (3) zwischen 10 und 15 mm liegt.

15. Verfahren nach Anspruch 14, dadurch gekennzeichnet, daß die gesamte über der Platte (1) mit der Schicht (2) aus polykristallinem Diamant und dem harten Metallträger (3) 10,7 mm beträgt.

16. Verfahren nach Anspruch 15, dadurch gekennzeichnet, daß die Platte (1) während der ersten Phase längs einer geneigten Ebene, die einen spitzen Winkel von 30° bildet, geschnitten wird, wobei die Ebene der rechten Winkel zu der Oberfläche der Platte (1) verläuft.

17. Schneidwerkzeug mit austauschbaren Schneideinsätzen oder Klingen, wobei die Schneideinsätze oder Klingen entfernbar auf dem Werkzeug an einem Träger oder Kopf (22) montiert sind, der durch die Verfahren nach den Ansprüchen 13 bis 16 erhalten wurde.

## Revendications

1. Procédé d'obtention d'outils de coupe qui consiste à :
a) découper les inserts de coupe des outils (10) à partir d'une plaque consistant en une couche de diamant polycristallin (2) disposée sur un support en métal dur (3), découper dans une première phase une pluralité de portions (4, 5, 6, 7 ; 11, 12, 13, 14) dont chacune correspond à un ou plusieurs inserts de coupe (8 ; 15) et découper dans une seconde phase lesdites portions en inserts de coupe individuels (8 ; 15),
b) insérer lesdits inserts de coupe dans des logements du corps (9 ; 16) des outils (10),
caractérisé en ce que les inserts de coupe (15) sont disposés sur le corps (16) des outils (10) de telle façon que la couche de diamant polycristallin n'occupe que la partie qui est la plus éloignée de l'axe (16a) de rotation de l'outil (10).

2. Procédé selon la revendication 1, caractérisé en ce que les inserts de coupe (15) sont découpés de telle façon que la distance entre deux coupes adjacentes est comprise entre 1 et 5 mm.

3. Procédé selon la revendication 1 ou 2, caractérisé en ce qu'il consiste à :
c) usiner le corps des outils (10) pour former des logements destinés aux inserts de coupe (15), et
d) y souder ces inserts de coupe (15).

4. Procédé selon l'une des revendications 1 à 3, caractérisé en ce que l'épaisseur de la couche (2) de diamant polycristallin est comprise entre 0,5 et 1,5 mm, de préférence 1 mm, et l'épaisseur de la couche de support en métal dur (3) est comprise entre 5 et 15 mm, de préférence 8 mm.

5. Procédé selon l'une des revendications 1 à 4, caractérisé en ce que la plaque (1) est découpée pendant la première phase selon un plan incliné qui forme un angle aigu avec le plan perpendiculaire à la surface de la plaque, rendant l'angle d'attaque A de l'outil (10) défini pour différentes positions de l'insert de coupe.

6. Procédé selon la revendication 5, selon lequel les logements pour les inserts de coupe consistent en une partie arrière et une partie inférieure, caractérisé en ce que les logements sont usinés dans le corps (16) de l'outil de telle façon que la partie inférieure du logement, et un plan perpendiculaire à la partie arrière du logement et parallèle à l'axe de l'outil, forment un angle G qui est égal à l'angle de coupe aigu.

7. Procédé selon la revendication 6, caractérisé en ce que l'angle de coupe aigu est compris entre 9 et 30° selon les différents angles d'attaque A de l'outil.

8. Procédé selon la revendication 7, caractérisé en ce que l'angle de coupe aigu est de 24°.

9. Procédé selon la revendication 6, caractérisé en ce que la partie inférieure du logement est usinée avec une précision de 0,02 mm.

10. Procédé selon la revendication 6, caractérisé en ce que les inserts de coupe (15) sont insérés dans leurs logements respectifs et soudés sous une pression contrôlée de manière à obtenir une projection radiale de 0,1 mm.

11. Procédé selon la revendication 10, caractérisé en ce que l'usinage périphérique des inserts de coupe (15), de manière à donner à la couche (2) de diamant polycristallin les dimensions requises, est exécuté par électroérosion en utilisant une puissance inférieure et un temps supérieur à la puissance et au temps utilisés pour l'usinage du métal dur.

12. Procédé selon l'une quelconque des revendications précédentes, caractérisé en ce que les faces avant (17) des inserts de coupe (15) sont usinées pour former des dents concaves.

13. Procédé selon la revendication 1 ou 2, caractérisé en ce qu'il consiste à :
c) percer un ou plusieurs trous (20, 21) dans les inserts de coupe ou les lames (19) pour les fixer sur le support ou la tête (22) ;
d) disposer les inserts de coupe ou les lames (19) sur le support ou la tête (22) des outils, en les montant de façon amovible.

14. Procédé selon la revendication 13, caractérisé en ce que l'épaisseur de la couche (2) de diamant polycristallin est comprise entre 0,5 et 1,5 mm et l'épaisseur du support en métal dur (3) est comprise entre 10 et 15 mm.

15. Procédé selon la revendication 14, caractérisé en ce que la hauteur totale de la plaque (1) comprenant la couche de diamant polycristallin et le support en métal dur (3), est de 10,7 mm.

16. Procédé selon la revendication 15, caractérisé en ce que la plaque (1) est découpée pendant la première phase selon un plan incliné qui forme un angle aigu de 30° avec le plan perpendiculaire à la surface de la plaque (1).

17. Outil de coupe ayant des inserts de coupe ou des lames interchangeables, lesdits inserts de coupe ou lames étant montés de façon amovible sur les outils sur un support ou une tête (22), obtenu par le procédé selon les revendications 13 à 16.
